# EUROPÄISCHE PATENTSCHRIFT

(11) **EP 2 742 827 B1**
(45) Veröffentlichungstag und Bekanntmachung des Hinweises auf die Patenterteilung: **11.03.2015**
(21) Anmeldenummer: 12196572.7
(22) Anmeldetag: 11.12.2012
(51) Int. Cl.: A47C 7/14, A47C 7/44, F16F 9/46, A47C 7/34

(54) **Dämpfungseinrichtung**
Dampening device
Dispositif d'amortissement

(43) Veröffentlichungstag der Anmeldung: 18.06.2014
(73) Patentinhaber: Brändle, Karl-Heinz, 88289 Waldburg/Hannober (DE)
(72) Erfinder: Brändle, Karl-Heinz, 88289 Waldburg/Hannober (DE)
(74) Vertreter: Engelhardt & Engelhardt

(56) Entgegenhaltungen:
- EP-A1- 2 387 913
- WO-A2-96/08950
- US-A1- 2003 075 403

## Beschreibung

Die Erfindung bezieht sich auf eine Dämpfungseinrichtung nach dem Oberbegriff des Patentanspruches 1 und soll insbesondere an einer Tragsäule eines Stuhles zur Federung der Stuhl-Sitzplatte verwendet werden können.

Solche Dämpfungseinrichtungen kommen beispielsweise bei einem Stuhl zur Verbesserung der menschlichen Sitzhaltung zum Einsatz, denn durch diese soll die Neigung der Sitzplatte des Stuhles bei Belastungswechseln gefedert bzw. gedämpft sein. Üblicherweise ist dabei die Sitzplatte über eine Gelenkeinrichtung mit einer Säule des Stuhles gekoppelt und kann in verschiedene Kippebenen durch Verlagerung der Gewichtskraft einer auf der Sitzplatte des Stuhles sitzenden Person verändert werden. Die Dämpfungseinrichtung ist demnach zwischen der Tragsäule und der Gelenkeinrichtung der Sitzplatte angeordnet.

Solche Dämpfungseinrichtungen sind beispielsweise aus der WO2009/127061A1 oder der EP 2 387 913 A1 bekannt.

Aus WO 960 8950 A2 ist eine Dämpfungseinrichtung nach dem Oberbegriff des Anspruchs 1 bekannt.

Die Dämpfungseinrichtung der WO2009/127061 A1 besteht im Wesentlichen aus elastisch verformbaren Körpern, die beim Auslenken der Sitzplatte zusammengedrückt sind, wodurch eine der Bewegung der Sitzplatte entgegenwirkende Rückstellkraft entsteht, so dass die Sitzplatte beim Auslenken um die entsprechende KippAchse gedämpft ist.

Bei der Dämpfungseinrichtung der EP 2 387 913 A1 soll dagegen ein Medium, dass in einem Leitungssystem eingefüllt ist, eine federnde bzw. dämpfende Funktion auf die Sitzplatte ausüben. In einem Leitungssystem mit vier Öffnungen ist dabei ein Stellglied oder eine Stellschraube eingedreht. Die Stellschraube weist mehrere unterschiedlich groß bemessene Durchmesser auf, die jeweils mit Austritts- und Eintrittsöffnungen des Leitungssystems derart zusammenwirken, dass der Querschnitt der Austritts- bzw. Eintrittsöffnungen des Leitungssystems verändert werden kann, um die Durchflussmenge des Mediums im Be- und Entlastungszustand der Sitzplatte einzustellen.

Als nachteilig bei diesem Stand der Technik hat sich herausgestellt, dass das Leitungssystem im Inneren des Gehäuses der Dämpfungseinrichtung äußerst komplex und daher schwierig zu fertigen ist. Solche konstruktiv aufwendigen Leitungssysteme sind in ihrer Herstellung kostenintensiv, da mehrere Arbeitsgänge erforderlich sind, das Leitungssystem in das Gehäuse einzuarbeiten.

Darüberhinaus können solche Leitungssysteme verstopfen oder aber nach längerem Gebrauch verstellt sich die jeweilige Querschnittsfläche des Leitungssystems wodurch die eingestellte Dämpfungseigenschaft verloren geht. Auch entstehen Dichtungsprobleme, denn das eingefüllte Medium ist in jedem Leitungsabschnitt flüssigkeitsdicht zu kapseln.

Oftmals werden die Stühle von unterschiedlich schweren Personen benutzt, so dass in Abhängigkeit von der auf die Sitzplatte einwirkenden Gewichtskraft der Personen eine entsprechend optimale Dämpfungseigenschaft für die Sitzplatte individuell eingestellt werden soll. Die Einstellungsmöglichkeiten sowohl bei der Dämpfungseinrichtung nach der WO2009/127061A1 als auch nach der EP 2 387 913 A1 sind jedoch begrenzt, denn die elastisch verformbaren Körper sind fest in dem Gehäuse eingebaut und das Stellglied ist von außen nicht ohne weiteres zugänglich bzw. die Einstellung erfordert Erfahrung und entsprechendes Wissen, um die optimale Position des Stellgliedes zu finden.

Es ist daher Aufgabe der Erfindung, eine Dämpfungseinrichtung der eingangs genannten Gattung derart weiterzubilden, dass diese einfach und kostengünstig herzustellen ist und dass die Dämpfungseigenschaften ohne weiteres von außen einstellbar ist. Die Einstellbarkeit der Dämpfungseinrichtung soll dabei derart möglich sein, dass das Gehäuse nicht gesondert abzudichten ist; vielmehr soll die Einstellung der Dämpfungseinrichtung von außen möglich sein, ohne dass Dichtungsprobleme an dem Gehäuse auftreten.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass das Stellglied in der Hülse rotierbar gelagert ist und von außen mit Hilfe eines Betätigungs-Magneten einstellbar ist, kann die schiefe Ebene des Stellgliedes die Eintrittsöffnung nahezu vollständig verschließen oder freigeben, so dass durch die entsprechende Position der schiefen Ebene die Durchflussmenge in der Zuleitung von außen einstellbar ist. Sollte daher der Benutzer in Abhängigkeit von seiner Gewichtskraft eine weichere oder festere Sitzposition zu erhalten wünschen, ist die Durchflussmenge durch die Zuleitung bzw. der Eintrittsöffnung mit Hilfe des Stellgliedes von außen ohne weiteres möglich. Eine solche Einstellungsmöglichkeit kann auf einfache Weise gefertigt werden, denn es sind keine besonderen Montage- oder Konstruktionsarbeiten erforderlich, denn die Eintrittsöffnung in der Zuleitung der Hülse ist lediglich eine übliche Bohrung. Auch die Lagerung des Stellgliedes in der Hülse erfolgt auf konstruktiv unkomplizierte Weise, denn hierbei handelt es sich um ein handelsübliches Bauteil, das in einer Hülse drehbar gelagert ist.

Es ist besonders vorteilhaft, in das Stellglied eine exzentrisch zu der Längsachse des Stellgliedes verlaufende Aufnahmetasche einzuarbeiten, um in diese einen Magneten einzusetzen und ortsfest mit dem Stellglied zu verbinden, denn dadurch kann der Magnet des Stellgliedes von außen mit einem gegenpoligen Betätigungs-Magneten derart beeinflusst werden, dass das Stellglied um die eigene Längsachse rotieren kann, so dass die schiefe Ebene des Stellgliedes gegenüber der Eintrittsöffnung der Zuleitung verdreht werden kann, um die Durchflussmenge des Mediums durch die Eintrittsöffnung der Zuleitung einzustellen.

Desweiteren ist es besonders zweckmäßig, wenn auf das Gehäuse der Dämpfungseinrichtung ein Betätigungsgehäuse aufgesetzt oder aufgeklipst ist, dessen Position bezogen auf die von dem Stellglied gebildeten Ebene exakt derart ausgerichtet ist, dass der Betätigungs-Magnet, der in einer Einstellschraube, die drehbar in dem Betätigungsgehäuse gelagert ist, eingesetzt ist, exakt fluchtend zu dem Magneten des Stellgliedes ausgerichtet ist.

Eine solche fluchtende Anordnung zwischen den beiden Magneten wird dadurch erreicht, dass zum einen in dem Gehäuse der Dämpfungseinrichtung mindestens zwei voneinander beabstandete Magnetsegmente eingebaut sind, und zum anderen sind in dem Betätigungsgehäuse zwei Positionierungs-Magnetsegmente vorgesehen, die in einem identischen Kreissegment des Betätigungsgehäuses angeordnet sind, wie die Ausrichtungs-Magnete in dem Gehäuse der Dämpfungseinrichtung. Die jeweiligen gegenüberliegenden Ausrichtungs- und Einstell-Magnete sind dabei gegenpolig zueinander ausgerichtet, so dass sich Nord- und Südpol oder umgekehrt der Magnete gegenüberstehen und folglich eine Anziehungskraft zwischen den beiden Paaren von Magneten in dem Gehäuse und dem Betätigungsgehäuse einstellt. Die beiden Paare von Magneten ziehen sich demnach gegenseitig an, sobald das Betätigungsgehäuse in dem Magnetfeld der beiden Magnetsegmente in dem Gehäuse der Dämpfungseinrichtung eintritt. Wird daher das Betätigungsgehäuse um die eigene Längsachse verdreht bis die Magnetfelder der Paare von Magneten exakt fluchtend übereinander liegen, so dass dann eine entsprechende Ausrichtung des Betätigungsgehäuses und damit des Betätigungs-Magneten in der der Einstellschraube zu dem Magneten in dem Stellglied vorherrscht.

In der Zeichnung ist eine erfindungsgemäße Ausführungsvariante einer Dämpfungseinrichtung jeweils im Schnitt dargestellt, die nachfolgend näher erläutert ist. Im Einzelnen zeigt:
- Figur 1: die Dämpfungseinrichtung, bestehend aus einem Gehäuse, in dem eine Hülse angeordnet ist, durch die ein Kolben axial beweglich abgestützt, aus einer an dem Kolben angebrachten Kolbenstange, die aus dem Gehäuse herausragt, und aus zwei in dem Gehäuse durch den Kolben abgetrennte Druckräume, in denen ein Medium eingefüllt ist, in zwei orthogonalen Schnittansichten und im unbelasteten Zustand,
- Figur 2: die Dämpfungseinrichtung gemäß Figur 1 zu Beginn des Belastungszustandes,
- Figur 3: ein vergrößerter Ausschnitt der Dämpfungseinrichtung gemäß Figur 1 im Bereich einer Eintrittsöffnung einer in die Hülse eingearbeiteten Zuleitung und einem mit einer schiefen Ebene versehenen Stellglied, durch das die Eintrittsöffnung miteinemvariablen Durchtrittsquerschnitt teilweise verschließbar ist, im geöffneten Zustand der Eintrittsöffnung,
- Figur 4: die Dämpfungseinrichtung gemäß Figur 3 in einem geschlossenen Zustand der Eintrittsöffnung,
- Figur 5: ein vergrößerter Ausschnitt der Dämpfungseinrichtung gemäß Figur 1 mit einer in den Kolben eingearbeiteten Ableitung, die mittels eines Ventils verschlossen ist, und
- Figur 6: ein vergrößerter Ausschnitt der Dämpfungseinrichtung gemäß Figur 5 mit dem geöffneten Ventil in der Ableitung.

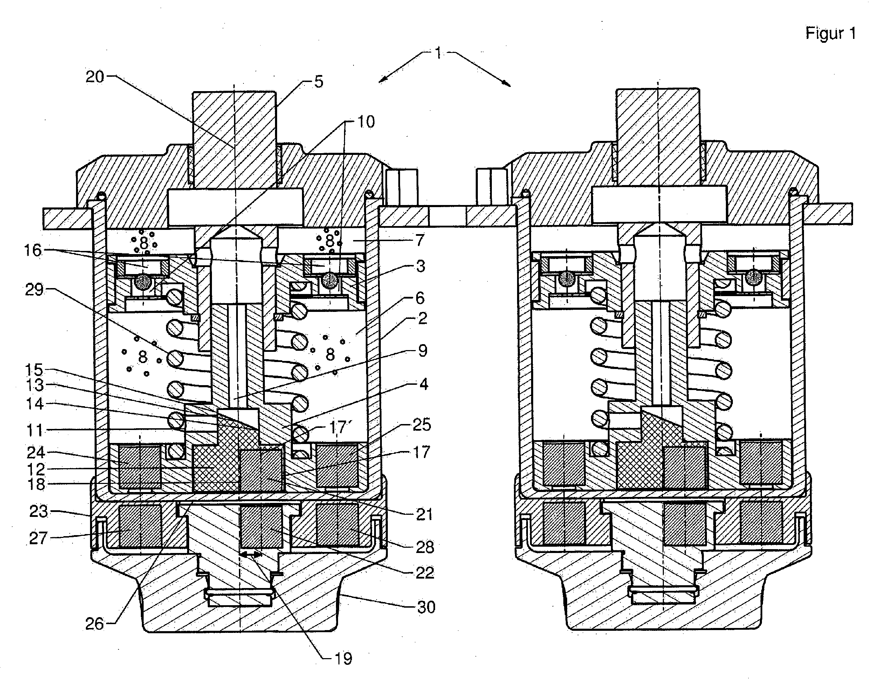

Durch eine in den Figuren 1 bis 6 abgebildete Dämpfungseinrichtung 1 sollen Gewichtskräfte, die beispielsweise auf eine Sitzplatte eines Stuhles einwirken, abgefedert werden. Die Sitzplatte des Stuhles ist dabei um mindestens eine Achse beweglich an einer Tragsäule des Stuhles angelenkt. Die Dämpfungseinrichtung 1 überträgt demnach die Gewichtskräfte von der Sitzplatte des Stuhles auf dessen Tragsäule.

Um eine optimale Dämpfung der Stuhlplatte zu erreichen, die auch für unterschiedlich schwere Personen ohne weiteres einfach und unkompliziert einstellbar ist, besteht die Dämpfungseinrichtung 1 zunächst aus einem Gehäuse 2 in dem eine Hülse 4, und zwar in Längsrichtung des Gehäuses 2, eingebaut ist. An der Hülse 4 ist ein Kolben 3 axial beweglich gelagert, durch den folglich zwei im inneren des Gehäuses 2 vorgesehene Druckräume 6 und 7 gas- oder flüssigkeitsdicht voneinander abgetrennt sind. In den beiden Druckräumen 6 und 7 ist ein Medium 8, beispielsweise Wasser oder ein Hydrauliköl, eingefüllt Es ist auch denkbar, dass in den beiden Druckräumen 6 und 7 ein Gas, beispielsweise Luft, eingefüllt ist und somit die Dämpfungseinrichtung 1 sowohl hydraulisch als auch pneumatisch betrieben werden kann.

Um die von der Sitzplatte auf die Dämpfungseinrichtung 1 einwirkenden Belastungskräfte F auf den Kolben 3 übertragen zu können, ist eine an diesem angebrachte Kolbenstange 5 vorgesehen, die aus dem Gehäuse 2 in Richtung der Sitzplatte des Stuhles hinausgeführt und mit diesem über eine Gelenkeinrichtung verschwenkbar verbunden ist. Zwischen der Innenwand des Gehäuses 2 und der Kolbenstange 5 sind geeignete Dichtungen angebracht, um das Innere des Gehäuses 2 nach außen abzudichten.

Für die Kommunikation der beiden Druckräume 6 und 7 miteinander ist zunächst in der Hülse 4 eine Zuleitung 9 eingearbeitet, die in den Druckraum 6, der von dem freien Ende der Kolbenstange 5 am weitesten beabstandet ist, einmündet. Die Zuleitung 9 weist eine im Querschnitt runde Eintrittsöffnung 11 auf, die im Bereich des Druckraumes 6 angeordnet ist. Sobald demnach auf die Kolbenstange 5 die Betätigungskraft F einwirkt, wird der Kolben 3 in Richtung des Bodens 26 des Gehäuses 2 bewegt, so dass dadurch das in dem Druckraum 6 befindliche Medium 8 durch die Zuleitung 9 in den oberhalb angeordneten Druckraum 7 einströmt.

Sobald die Belastung der Sitzplatte aufgehoben ist, also keine Betätigungskraft F auf die Kolbenstange 5 einwirkt, wird der Kolben 3 durch eine zwischen diesem und dem Boden 26 des Gehäuses 2 vorgesehene Schraubendruckfeder 29 in Richtung der Ausgangslage, also nach oben, gedrückt. Um zu verhindern, dass das in dem oberen Druckraum 7 eingeströmte Medium 8 dieser Bewegung des Kolbens 3 entgegenwirkt, ist in dem Kolben 3 eine Ableitung 10 vorgesehen, die durch ein Ventil 16 derart verschlossen oder geöffnet ist, dass das Medium 8 entweder während des Belastungszustandes von dem Durchtritt durch das Ventil 16 abgehalten ist oder im Entlastungszustand durch die Ableitung 10 von dem oberen Druckraum 7 in den unteren Druckraum 6 strömen kann.

Dabei ist es notwendig, dass der Durchtrittsquerschnitt der Eintrittsöffnung 11 wesentlich kleiner bemessen ist, als der Querschnitt der Ableitung 10, um zu erreichen, dass der Kolben 3 im Belastungszustand möglichst langsam und demnach gedämpft in Richtung des unteren Druckraumes 6 bewegt ist, und dass der Kolben 3 im Entlastungszustand durch die Schraubendruckfeder 29 so rasch als möglich in die Ausgangslage zurücküberführt ist.

Die Dämpfungseigenschaften der Dämpfungseinrichtung 1 hängen folglich von den geometrischen Abmessungen der Zuleitung 9 und der Ableitung 10 ab. Insbesondere wenn der Durchtrittsquerschnitt der Zuleitung 9 variabel einstellbar ist, kann die Dämpfungseigenschaft der Dämpfungseinrichtung 1 variabel an die Gewichtskraft der Person angepasst werden, die momentan die Sitzplatte des Stuhles belastet. Oftmals haben die Benutzer des Stuhles unterschiedliche Empfindungen bezüglich des Sitzkomforts auf dem Stuhl, so dass auch in Abhängigkeit von den gewünschten Sitzeigenschaften die Dämpfungseinrichtung 1 einzustellen ist.

Zu diesem Zweck ist indem Gehäuse 2 ein Stellglied 12 vorgesehen, das verdrehbar in der Hülse 4 gelagert ist. Das Stellglied 12 weist eine schiefe Ebene 13 auf, die im Bereich der Eintrittsöffnung 11 der Zuleitung 9 angeordnet ist. Die schiefe Ebene 13 verläuft demnach innerhalb der Zuleitung 9. Beim Verdrehen der schiefen Ebene 13 kann die Eintrittsöffnung 11 vollständig freigegeben sein, so dass der größtmögliche Durchtrittsquerschnitt an der Eintrittsöffnung 11 freigegeben ist, oder die schiefe Ebene 13 verschließt die Eintrittsöffnung 11 nahezu vollständig, so dass lediglich ein äußerst gering bemessener Volumenstrom des Mediums 8 durch die Eintrittsöffnung 11 hindurchgelangt. Durch die Verdrehung der schiefen Ebene 13 des Stellgliedes 12 wird demnach erreicht, dass die Dämpfungseigenschaften der Dämpfungseinrichtung 1 variabel eingestellt werden können, denn in Abhängigkeit von dem Volumenstrom des Mediums 8 durch die Eintrittsöffnung 11 und in Abhängigkeit von der Betätigungskraft F, die auf die Kolbenstange 5 einwirkt, verändert sich die entsprechende Dämpfungseigenschaft.

Die schiefe Ebene 13 verläuft zwischen einer unteren Stirnkante 14 und einer oberen Stirnkante 15 des Stellgliedes 12. Der Abstand zwischen der unteren Stirnkante 14 und der oberen Stirnkante 15 entspricht dabei dem Durchmesser oder der Höhe der Eintrittsöffnung 11.

Um das Stellglied 12 in der Hülse 4 verdrehen zu können, ist eine Krafteinleitung erforderlich, durch die das Stellglied 12 und damit die schiefe Ebene 13 in gewünschter Weise zu der Eintrittsöffnung 11 der Zuleitung 9 ausgerichtet werden kann. Darüberhinaus ist zu beachten, dass jede in das Gehäuse 2 eingearbeitete Durchgangsöffnung abzudichten ist, um den Austritt des Mediums 8 und damit Druckverluste zu vermeiden. Oftmals sind solche Abdichtungsmaßnahmen schwierig herzustellen und in der jeweiligen Umsetzung kostenintensiv zu realisieren.

Zur Verdrehung des Stellgliedes 12 ist in diesem eine Aufnahmetasche 17 eingearbeitet. Die Längsachse des Stellgliedes 12 ist mit der Bezugsziffer 18 gekennzeichnet. Die Längsachse 18 des Stellgliedes 12 verläuft dabei fluchtend zu der Längsachse des Gehäuses 2 bzw. der Längsachse 20 der Hülse 4. Die Symmetrieachse 17' der Aufnahmetasche 17 ist seitlich beabstandet zu der Längsachse 18 des Stellgliedes 12 angeordnet, so dass zwischen der Längsachse 18 des Stellgliedes 12 und der Symmetrieachse 17' der Aufnahmetasche 17 eine Exzentrizität 19 vorgegeben ist.

In die Aufnahmetasche 17 ist ein Magnet 21 ortsfest eingebaut, dessen einer Pol in Richtung des Bodens 26 des Gehäuses 2 ausgerichtet ist. Zur Verdrehung des Stellgliedes 12 ist es nunmehr erforderlich, einen Betätigungsmagneten 22 zu verwenden, der auf der Außenseite des Bodens 26 des Gehäuses 2 derart zu positionieren ist, dass zwischen dem Magneten 21 des Stellgliedes 12 und dem Betätigungsmagneten 22 eine magnetische Anziehungskraft entsteht. Sobald nämlich der Betätigungsmagnet 22 um den Mittelpunkt der Längsachse 18 bewegt wird, wird dadurch auch der Magnet 21 des Stellgliedes 12 bewegt, so dass das Stellglied 12 eine Rotationsbewegung ausführt.

Zur Einstellung der Dämpfungseigenschaften müsste demnach jeder Benutzer einen entsprechenden Betätigungsmagneten 22 verwenden und die Position des Magneten 21 des Stellgliedes 12 finden. Dies könnte zwar als einfachste Ausführungsvariante der erfindungsgemäßen Dämpfungseinrichtung 1 vorgesehen sein, jedoch ist es zweckmäßiger, die Position des Betätigungsmagneten 22 vorzugeben und diesen permanent an dem Gehäuse 2 vorzusehen.

Hierfür dient ein Betätigungsgehäuse 23, das auf das Gehäuse 2 im Bereich des Bodens 26 aufgerastet oder aufgeklippst werden kann. Es ist jedoch erforderlich, dass der Magnet 21, dessen Position im Inneren des Gehäuses 2 nicht von außen erkennbar ist, und der Betätigungsmagnet 22 möglichst exakt fluchtend zueinander positioniert sind, um eine optimale magnetische Anziehungskraft zwischen den Magneten 21 und dem gegenpolig dazu ausgerichteten Betätigungsmagneten 22 zu erzielen.

Um folglich die Ausrichtung des Betätigungsgehäuses 23 an dem Gehäuse 2 zu gewährleisten, sind im Inneren der Hülse 4 zwei Magnetsegmente 24 und 25 in einer Ebene angebracht; die gleichpolig oder entgegengesetzt gepolt zueinander ausgerichtet sind. Die von den Magneten 21 sowie den Magnetsegmenten 24 und 25 gebildeten Magnetachsen verlaufen demnach parallel zueinander und zu der Längsachse 20 der Hülse 4.

In dem Betätigungsgehäuse 23 sind zwei weitere Magnetsegmente 27 und 28 vorgesehen, die sowohl in ihrer Flächenausdehnung als auch in ihrer magnetischen Ausrichtung an die Magnetsegmente 24 und 25 im Inneren der Hülse 4 angepasst sind; die beiden gegenüberliegenden Paare von Magnetsegmenten 24, 27 bzw. 25, 28 sollen sich gegenseitig magnetisch anziehen. Dazu sind die Magnetsegmente 27 und 28 des Betätigungsgehäuses 23 jeweils gegenpolig zu den Magnetsegmenten 24 und 25 der Hülse 4 angeordnet, so dass sich die beiden Paare von Magnetsegmenten 24 und 27 sowie 25 und 28 magnetisch anziehen, sobald die Magnetsegmente 27 und 28 des Betätigungsgehäuses 22 in den jeweiligen Bereich der Magnetsegmente 24 und 25 der Hülse 4 gelangen.

Beim Zusammenbauen des Betätigungsgehäuses 23 an das Gehäuse 2 werden demnach die Magnetfelder automatisch derart zueinander positioniert, dass das Betätigungsgehäuse 23 und damit der Betätigungsmagnet 22 in der gewünschten Stellung positioniert ist, nämlich derart, dass der Betätigungsmagnet 22 exakt fluchtend zu dem Magneten 21 des Stellgliedes 12 angeordnet ist. Es ist auch möglich, die von den beiden Magnetsegmenten 24 und 25 gebildeten Magnetfelder unterschiedlich zu polen und die äußeren Magnetsegmente 27 und 28 in entsprechender gegenpoliger Weise auszurichten. Dies bedeutet, dass eines der Magnetsegmente 24 mit dem Nordpol und das andere Magnetsegment 25 mit dem Südpol in Richtung des Bodens 26 ausgerichtet ist und dass die Magnetsegmente 27 und 28 entsprechend gegenpolig dazu verlaufen. Dies gewährleistet, dass lediglich eine Position des Betätigungsgehäuses 23 auf das Gehäuse 2 gefunden werden kann. Das Betätigungsgehäuse 23 wird beim Aufsetzen um die eigene Längsachse rotieren, bis die beiden Magnetfelder übereinstimmen.

Um die Rotationsbewegung des Betätigungsmagneten 22 zu vereinfachen, ist an dem Betätigungsgehäuse 23 eine Einstellschraube 30 vorgesehen, die von außen, beispielsweise, manuell gegriffen werden kann und die in dem Betätigungsgehäuse 23 rotierbar gelagert ist. In das freie dem Boden 26 zugewandte Ende der Einstellschraube 30 ist dabei der Betätigungsmagnet 22 eingesetzt.

Aufgrund der magnetischen Anziehung zwischen den Magneten 21 des Stellgliedes 12 und dem Betätigungsmagneten 22 der Einstellschraube 30 erfolgt eine berührungslose Kraftübertragung beim Verdrehen der Einstellschraube 30, denn wenn sich der Betätigungsmagnet 22 bewegt, erfolgt auch eine Bewegung des Magneten 21 und zwar korrespondierend mit der Bewegung des Betätigungsmagneten 22. Durch die beiden Paare der Magnetsegmente 24, 27 sowie 25 und 28 wird das Betätigungsgehäuse 23 an dem Gehäuse 2 ortsfest und lageorientiert gehalten, so dass eine Relativbewegung sowohl der Einstellschraube 30, bezogen auf das Betätigungsgehäuse 23, als auch des Stellgliedes 12 bezogen auf die Hülse 4 bzw. des Gehäuses 2, erfolgt. Aufgrund der Verdrehung der schiefen Ebene 13 des Stellgliedes 12 im Bereich der Eintrittsöffnung 11 kann der Durchtrittsquerschnitt der Eintrittsöffnung 11 variabel verändert werden, in dem nämlich die schiefe Ebene 13 des Stellgliedes 12 verdreht wird, so dass der Volumenstrom des Mediums 8 durch die Eintrittsöffnung 11 von außen eingestellt werden kann.

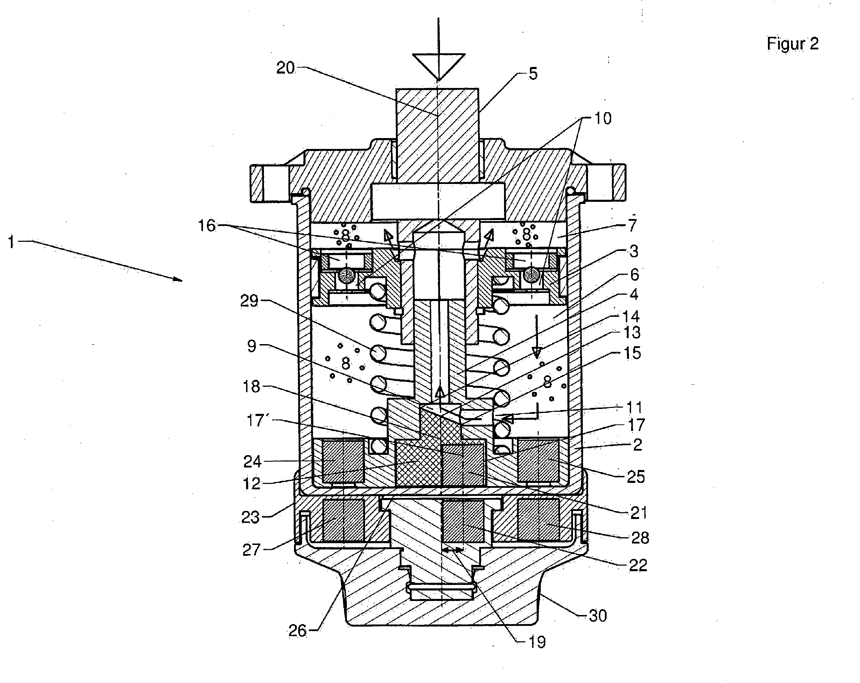

In Figur 2 ist gezeigt, dass durch den Kolben 3 das Medium 8 durch die Zuleitung 9 und die Eintrittsöffnung 11 von dem unteren Druckraum 6 in den oberen Druckraum 7 gepresst ist. Dabei wirkt die Betätigungskraft F auf das freie Ende der Kolbenstange 5, durch die der Kolben 3 axial entlang der Hülse 4 bewegt ist.

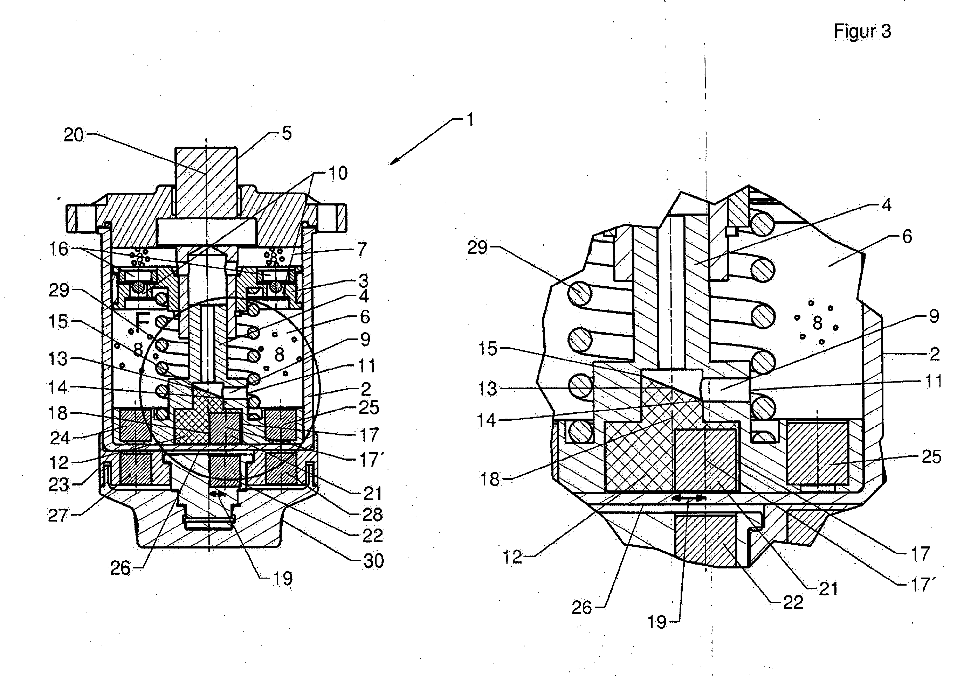

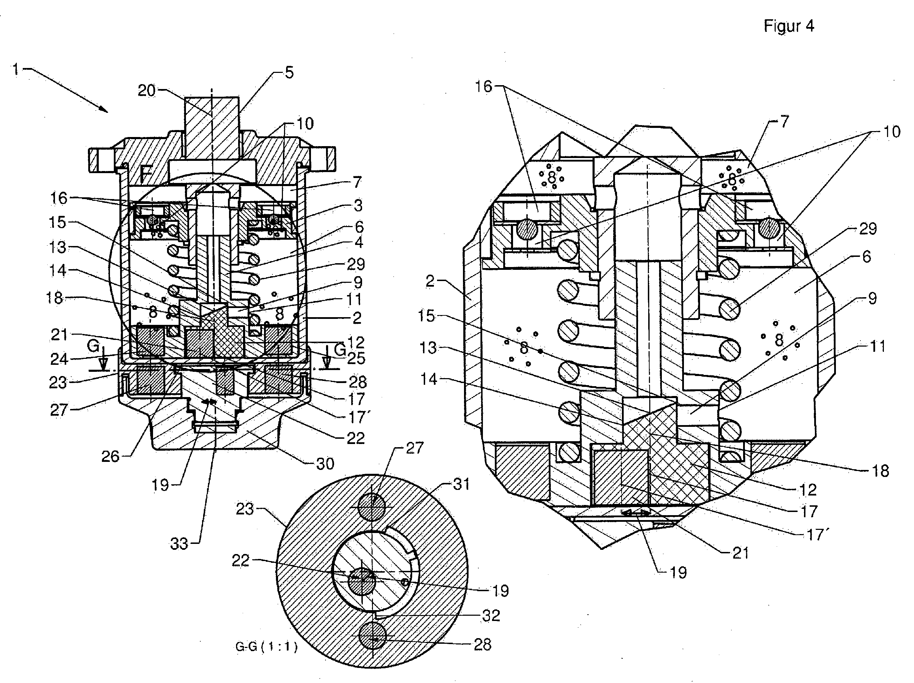

In den Figuren 3 und 4 ist die maximale Verdrehposition der schiefen Ebene 13 des Stellgliedes 12 zu entnehmen. Das Stellglied 12 kann nämlich zwischen zwei Anschlägen 31 und 32, die am Betätigungsgehäuse 23 angeformt sind und auf einer gemeinsamen Achse 33 angeordnet sind, verdreht werden. Folglich kann das Stellglied 12 um etwa 160° von einer offenen in eine geschlossene Stellung und vice versa überführt werden.

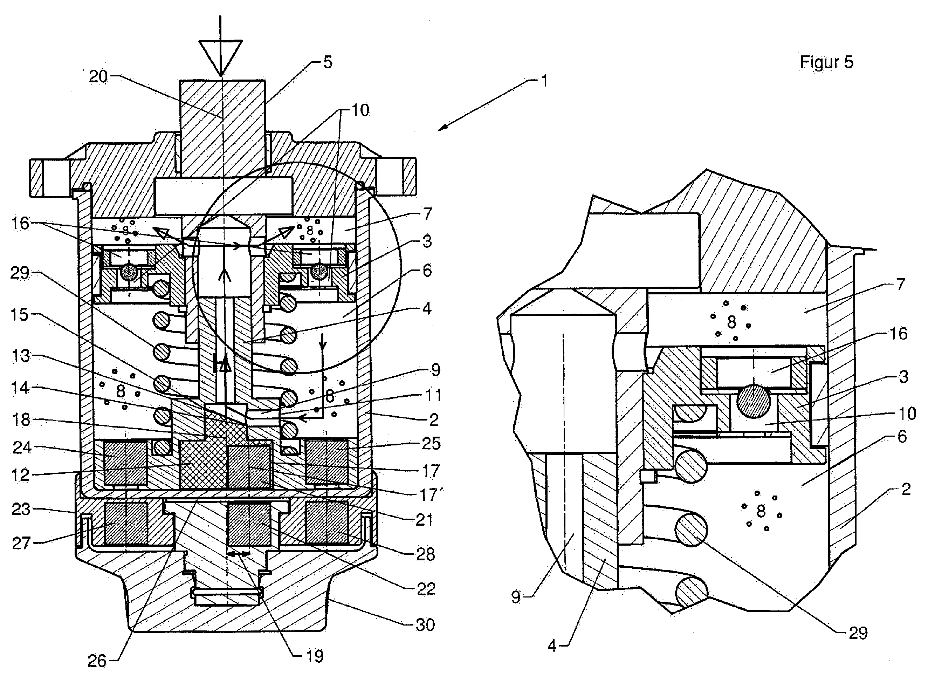

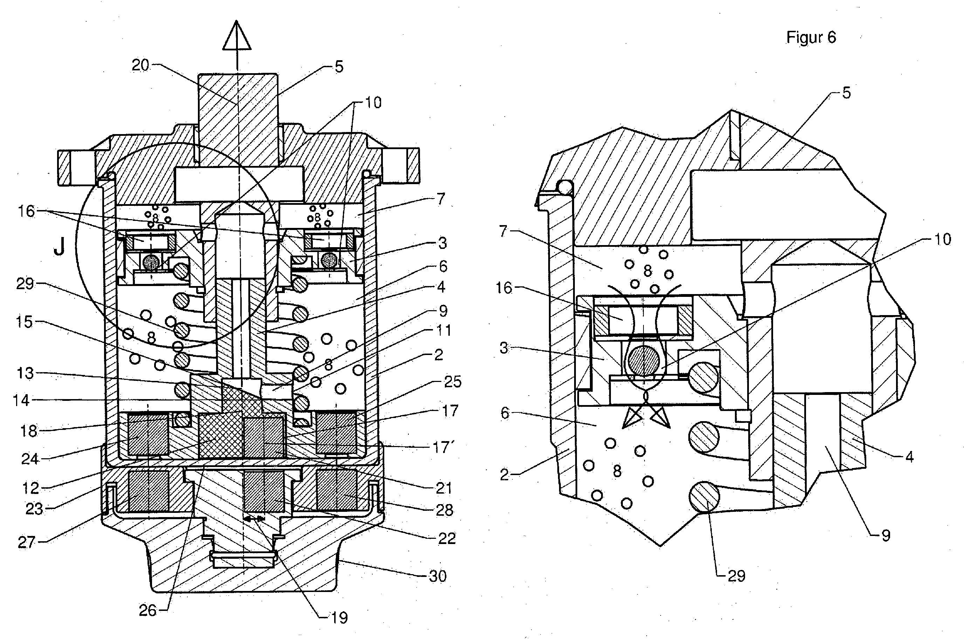

In den Figuren 5 und 6 ist die Betätigung der Ableitung 10 in Abhängigkeit von dem Belastungszustand gezeigt. In die Ableitung 10 ist ein Ventil 16 eingesetzt, das während die Betätigungskraft F auf die Kolbenstange 5 einwirkt, geschlossen ist, so dass das in dem Druckraum 7 eingefüllte Medium 8 aus der Ableitung 10 nicht abfließen kann. Das Ventil 16 besteht im Wesentlichen aus einer magnetischen Kugel und einem magnetischen als Ventilsitz dienenden Ring. Dadurch wird die Kugel sicher auf dem Ventilsitz gehalten. Aufgrund des höheren Druckzustandes in dem Druckraum 6 während der Belastung der Kolbenstange 5 wird demnach die Kugel des Ventils 16 in dessen Ventilsitz gepresst, so dass die Ableitung 10 verschlossen ist.

Sobald, und dies ist Figur 6 zu entnehmen, die Betätigungskraft F nicht mehr auf die Kolbenstange 5 einwirkt, drückt die Schraubendruckfeder 29 den Kolben 3 in Richtung des oberen Druckraumes 7, so dass in diesem nunmehr ein höherer Druckzustand vorherrscht als im unteren Druckraum 6, wodurch die Kugel des Ventiles 16 aus dessen Ventilsitz gedrückt ist, so dass das Medium 8 durch die Ableitung 10 in den unteren Druckraum 6 zurückströmen kann.

## Patentansprüche

1. Dämpfungseinrichtung (1) mit einem Gehäuse (2), in dem ein Kolben (3) an einer in dem Gehäuse (2) abgestützten Hülse (4) axial beweglich gehalten ist, und der zwei Druckräume (6, 7), die mit einem Medium (8) gefüllt sind, voneinander trennt und abdichtet; mit mindestens einer aus dem Gehäuse (2) herausgeführten und an dem Kolben (3) angebrachten Kolbenstange (5), die von außen mit einer Betätigungskraft (F) beaufschlagbar ist, mit einer in der Hülse (4) eingearbeiteten Zuleitung (9), durch die das Medium (8) im Belastungszustand von einem Druckraum (7) in den anderen Druckraum (6) gelangt, und mit einer in dem Kolben (3) vorgesehenen Ableitung (10), durch die die beiden Druckräume (6, 7) miteinander verbunden sind und die im Belastungszustand mittels eines Ventils (16) verschlossen und im Entlastungszustand geöffnet ist,
**dadurch gekennzeichnet,**
**dass** in der Hülse (4) ein Stellglied (12) angeordnet ist, dass das Stellglied (12) eine schiefe Ebene (13) aufweist, die im Bereich der Eintrittsöffnung (11) der Zuleitung (9) angeordnet ist, dass das Stellglied (12) um die eigene Längsachse (18) verdrehbar in der Hülse (4) gelagert ist, und dass das Stellglied (12) mit Hilfe eines Betätigungs-Magneten (22), der von außen auf das Gehäuse (2) aufgesetzt ist, bewegbar ist.

2. Dämpfungseinrichtung nach Anspruch 1,
**dadurch gekennzeichnet,**
**dass** in das Stellglied (12) eine Aufnahmetasche (17) eingearbeitet ist, die seitlich versetzt zu der Längsachse (18) des Stellgliedes (12), die fluchtend zu der Längsachse (20) der Hülse (4) verläuft, angeordnet ist, und dass in die Aufnahmetasche (17) ein Magnet (21) eingesetzt ist, der ortsfest mit dem Stellglied (12) verbunden ist.

3. Dämpfungseinrichtung nach Anspruch 2,
**dadurch gekennzeichnet,**
**dass** die Pole des Betätigungsmagneten (22) und des Magneten (21) des Stellgliedes (12) gegenpolig zueinander ausgerichtet sind.

4. Dämpfungseinrichtung nach einem der vorgenannten Ansprüche,
**dadurch gekennzeichnet,**
**dass** die schiefe Ebene (13) des Stellgliedes (12) zwischen einer oberen und einer unteren Stirnkante (14, 15) der Eintrittsöffnung (11) der Zuleitung (9) verläuft und dass die schiefe Ebene (13) zwischen zwei am Betätigungsgehäuse (23) angearbeiteten Anschlägen (31, 32) rotierbar ist.

5. Dämpfungseinrichtung nach Anspruch 4,
**dadurch gekennzeichnet,**
**dass** die beiden Anschläge (31, 32) einem Winkeln von 160° angeordnet sind und dass die Anschläge (31, 32) nahezu senkrecht auf der von der Eintrittsöffnung (11) gebildeten Ebene stehen.

6. Dämpfungseinrichtung nach einem der vorgenannten Ansprüche 2 bis 5,
**dadurch gekennzeichnet,**
**dass** in dem Gehäuse (2) seitlich in der Hülse (4), vorzugsweise im Bereich des Bodens (26) des Gehäuses (2), mindestens zwei Magnetsegmente (24, 25) angebracht sind, dass auf der gegenüberliegenden von außen zugänglichen Stirnseite des Gehäuse (2) ein Betätigungsgehäuse (23) aufgerastet oder aufgeklippst ist, in dem mindestens zwei gegenpolige Magnetsegmente (27, 28) zur Positionierung des Betätigungsgehäuses (23) an dem Gehäuse (2) der Dämpfungseinrichtung (1) vorgesehen sind und dass in dem Betätigungsgehäuse (23) eine Einstellschraube (30) drehbar gelagert ist, in die der Betätigungs-Magnet (22) eingesetzt ist, der im positionierten Zustand des Betätigungsgehäuses (23) an dem Gehäuse (2) der Dämpfungseinrichtung (1) fluchtend zu dem Magneten (21) des Stellgliedes (12) ausgerichtet und der gegenpolig zu diesem angeordnet ist.

7. Dämpfungseinrichtung nach Anspruch 6,
**dadurch gekennzeichnet,**
**dass** die Einstellschraube (30) aus dem Betätigungsgehäuse (23) übersteht und von außen zu deren Rotation zugänglich ist.

8. Dämpfungseinrichtung nach einem der vorgenannten Ansprüche,
**dadurch gekennzeichnet,**
**dass** in der Ableitung (10) ein magnetisches Ventil (16) angeordnet ist, das aus einer magnetischen Kugel und einem magnetischen Ring gebildet ist, die gegenpolig zueinander ausgerichtet sind, und dass die Kugel durch die Anziehungskräfte zwischen der Kugel und dem Ring in diesem im Belastungszustand der Kolbenstange (5) flüssigkeitsdicht gehalten ist.

## Claims

1. A dampening device (1) with a housing (2) in which a piston (3) is held in an axially moveable arrangement on a sleeve (4) supported in the housing (2) and which separates two pressurised chambers (6, 7) filled with a medium (8) from one another and seals them; with at least one piston rod (5) projecting from the housing (2) and attached to the piston (3), in which case the piston rod (5) can be subjected to an actuation force (F) from the outside, with an inlet line (9) worked into the sleeve (4), through which the medium (8) flows in the loaded condition from one pressurised chamber (7) to the other pressurised chamber (6), and with an outlet line (10) provided in the piston (3) by means of which the two pressurised chambers (6, 7) are connected together and which is closed by a valve (16) in the loaded condition and is opened in the non-loaded condition,
**characterised in that**,
the sleeve (4) has an actuator (12) worked into it, that the actuator (12) has a slanted plane (13) arranged in the area of the inlet opening (11) of the inlet line (9), that the actuator (12) is mounted in the sleeve (4) in a rotating arrangement about its own lengthways axis (18), and that the actuator (12) can be moved by means of an actuation magnet (22) that is placed on the housing (2) from the outside.

2. The dampening device in accordance with Claim 1,
**characterised in that**,
the actuator element (12) has a holding pocket (17) worked into it that is arranged laterally offset to the lengthways axis (18) of the actuator (12) running in alignment with the lengthways axis (20) of the sleeve (4), and that a magnet (21) is inserted in the holding pocket (17), in which case the magnet (21) is connected to the actuator (12) in a locationally fixed arrangement.

3. The dampening device in accordance with Claim 2,
**characterised in that**,
the poles of the actuation magnet (22) and of the magnet (21) of the actuator (12) are arranged with opposite polarity to one another.

4. The dampening device in accordance with one of the aforementioned claims,
**characterised in that**,
the slanted plane (13) of the actuator (12) runs between an upper and a lower face edge (14, 15) of the inlet opening (11) of the inlet line (9) and that the slanted plane (13) can be rotated between two stops (31, 32) worked onto the actuation housing (23).

5. The dampening device in accordance with Claim 4,
**characterised in that**,
the two stops (31, 32) are arranged at an angle of 160° and that the stops (31, 32) are almost at right angles to the plane formed by the inlet opening (11).

6. The dampening device in accordance with one of the aforementioned Claims 2 to 5,
**characterised in that**,
at least two magnet segments (24, 25) are attached in the housing (2) on the side in the sleeve (4), preferably in the area of the base (26) of the housing (2), that an actuation housing (23) is engaged or clipped onto the opposite face end of the housing (2) accessible from the outside, with at least two magnet segments (27, 28) having opposite poles provided on the housing (2) of the dampening device (1) for positioning the actuation housing (23) and that a setscrew (30) is mounted in the actuation housing (23) in a rotating arrangement and has the actuation magnet (22) inserted in it, which in the condition when the actuation housing (23) is positioned on the housing (2) of the dampening device (1) aligned flush with the magnet (21) of the actuator (12) and which is arranged with opposite polarity to it.

7. The dampening device in accordance with Claim 6,
**characterised in that**,
the setscrew (30) projects from the actuation housing (23) and is accessible from the outside for the purpose of rotation of the setscrew (30).

8. The dampening device in accordance with one of the aforementioned claims,
**characterised in that**,
a magnetic valve (16) is arranged in the outlet line (10) and consists of a magnetic ball and a magnetic ring which are arranged with opposite poles to one another, and that the ball is held by the forces of attraction between the ball and the ring in this in the loaded condition of the piston rod (5) for a liquid-tight seal.

## Revendications

1. Dispositif d'amortissement (1) avec un boîtier (2), dans lequel un piston (3) est retenu de manière axialement mobile sur une douille (4) s'appuyant sur le boîtier (2), et qui sépare et rend étanches deux chambres de pression (6, 7) remplies d'un milieu (8); avec au moins une tige de piston (5) montée sur le piston (3) et sortant du boîtier (2), qui se laisse actionner de l'extérieur avec une force d'actionnement (F), avec une conduite d'arrivée (9) pratiquée dans la douille (4) et permettant, sous charge, de transporter le milieu (8) d'une chambre de pression (7) à l'autre chambre de pression (6), et avec une conduite d'évacuation (10) prévue dans le piston (3) et raccordant les deux chambres de pression (6, 7) et qui, moyennant une soupape (16), est fermée sous charge et ouverte en état déchargé,
**caractérisé en ce que**
dans la douille (4), il est prévu un actuateur (12), que l'actuateur (12) possède un plan oblique (13) disposé à proximité de l'ouverture d'entrée (11) de la conduite d'arrivée (9), que l'actuateur (12) se laisse pivoter dans la douille (4) autour de son axe longitudinal (18) et que l'actuateur (12) se laisse mouvoir à l'aide d'un solénoïde d'actionnement (22) monté de l'extérieur sur le boîtier (2).

2. Dispositif d'amortissement d'après la revendication 1,
**caractérisé en ce que**
dans l'actuateur (12), il est pratiqué, latéralement à l'axe longitudinal (18) de l'actuateur (12), une poche de réception (17) disposée en alignement précis à l'axe longitudinal (20) de la douille (4), et que dans la poche de réception (17), il est monté un solénoïde (21) lié rigidement à l'actuateur (12).

3. Dispositif d'amortissement d'après la revendication 2,
**caractérisé en ce que**
les pôles du solénoïde d'actionnement (22) et du solénoïde (21) de l'actuateur (12) s'opposent avec leur pôles opposés.

4. Dispositif d'amortissement d'après une des revendications précédentes,
**caractérisé en ce que**
le plan oblique (13) de l'actuateur (12) s'étend entre un bord frontal supérieur et un bord frontal inférieur (14, 15) de l'ouverture d'entrée (11) de la conduite d'arrivée (9), et que le plan oblique (13) se laisse pivoter entre deux butées (31, 32) pratiquées sur le boîtier d'actionnement (23).

5. Dispositif d'amortissement d'après la revendication 4,
**caractérisé en ce que**
les deux butées (31, 32) sont disposées sous un angle de 160° et que les butées (31, 32) portent quasiment perpendiculairement sur le plan formé par l'ouverture d'entrée (11).

6. Dispositif d'amortissement d'après une des revendications précédentes 2 à 5,
**caractérisé en ce que**
dans le boîtier (2), sur le côté de la douille (4), de préférence près du fond (26) du boîtier (2), il est monté au moins deux segments magnétiques (24, 25), que sur la face frontale opposée du boîtier (2), qui est accessible de l'extérieur, il est cranté ou emmanché un boîtier d'actionnement (23), dans lequel il est prévu au moins deux segments magnétiques à pôles opposés (27, 28) servant au positionnement du boîtier d'actionnement (23) sur le boîtier (2) du dispositif d'amortissement (1), et que dans le boîtier d'actionnement (23), il se trouve une vis de réglage (30) qui se laisse tourner et dans laquelle il est inséré le solénoïde d'actionnement (22) qui, à l'état positionné du boîtier d'actionnement (23) du boîtier d'actionnement (23) sur le boîtier (2) du dispositif d'amortissement (1), est en alignement précis et à pôles opposés par rapport au solénoïde (21) de l'actuateur (12).

7. Dispositif d'amortissement d'après la revendication 6,
**caractérisé en ce que**
la vis de réglage (30) saille au-delà du boîtier d'actionnement (23) et est accessible de l'extérieur de manière à se laisser tourner.

8. Dispositif d'amortissement d'après une des revendications précédentes,
**caractérisé en ce que**
dans la conduite d'évacuation (10), il est disposé une soupape magnétique (16) composée d'une bille magnétique et d'un anneau magnétique à pôles opposés et que, en état de charge de la tige de piston (5), la force d'attraction entre la bille et l'anneau a pour effet que la bille est retenue sur celui-ci de manière étanche aux liquides.
